# EUROPEAN PATENT SPECIFICATION

(11) **EP 1 817 517 B1**
(45) Date of publication and mention of the grant of the patent: **17.03.2010**
(21) Application number: 04806794.6
(22) Date of filing: 16.11.2004
(51) Int. Cl.: F16K 11/20, F16K 11/074

(54) **TAP UNIT**
HAHNEINHEIT
UNITE DE ROBINET

(43) Date of publication of application: 15.08.2007
(73) Proprietor: CRS S.P.A., 28066 Galliate (IT)
(72) Inventor: MAMBRIN, Fabio, I-28053 Castelleto Ticino (IT)
(74) Representative: Crippa, Paolo Ernesto
(86) International application number: PCT/IT2004/000628
(87) International publication number: WO 2006/054320

(56) References cited:
- EP-A- 0 390 121

## Description

The present invention relates to a tap unit suitable to receive at least two fluids, mix them and send them to at least two outlets, such as the orifice of a tap and a shower head.

It is known that tap units have a substantially elongated body comprising a plurality of chambers suitable to receive hot water, cold water and mixed water to be conveyed to at least one outlet.

These tap bodies are manufactured by melting and are quite difficult to manufacture because of the presence of bulkheads and partition walls suitable to partition the body into several chambers for the fluid to be delivered to the various outlets of the bodies.

Accordingly, manufacturing these tap bodies is expensive and entails a lot of waste. Such tap bodies are known from EP 0390121 A1.

The problem of the present invention is to provide a tap unit that resolves the drawbacks mentioned with reference to the prior art.

These drawbacks and limitations are resolved by a tap unit in accordance with claim 1.

Other embodiments of the tap unit according to the invention are described in the following claims. present invention will be better understood from the description below of the preferred and non-limiting examples thereof, in which:

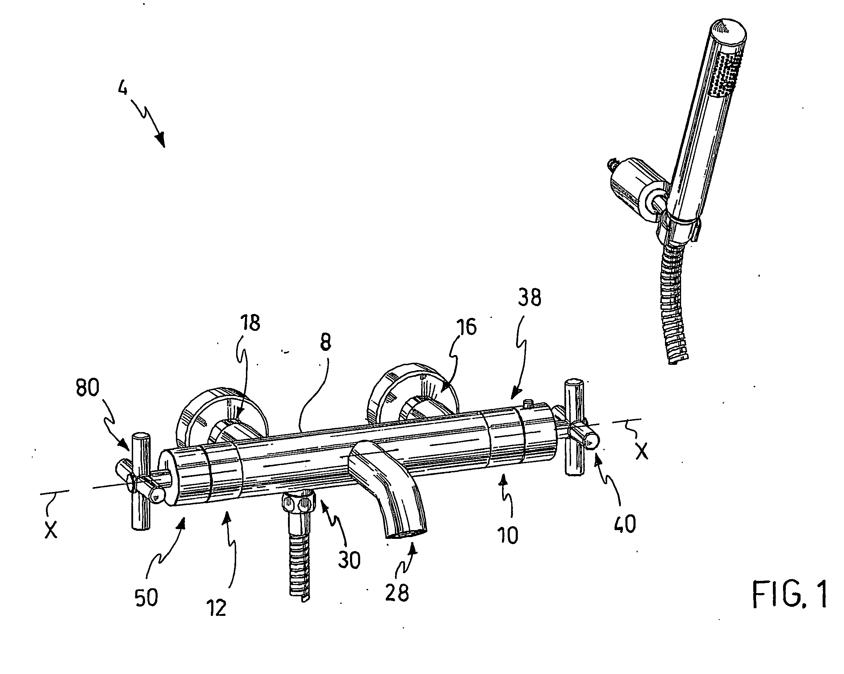

figure 1 is a perspective view of a tap unit according to the present invention;

figure 2 is a perspective partially sectional view of the tap unit from figure 1;

figure 2A is a sectional view of the tap unit from figure 1, taken along the sectional plane A of figure 2;

figure 3 is a partially sectional plan view of the tap unit from figure 1;

figure 4 is a further partially sectional plan view of the tap unit from figure 1;

figure 5 is a sectional view of a detail of the tap unit from figure 1;

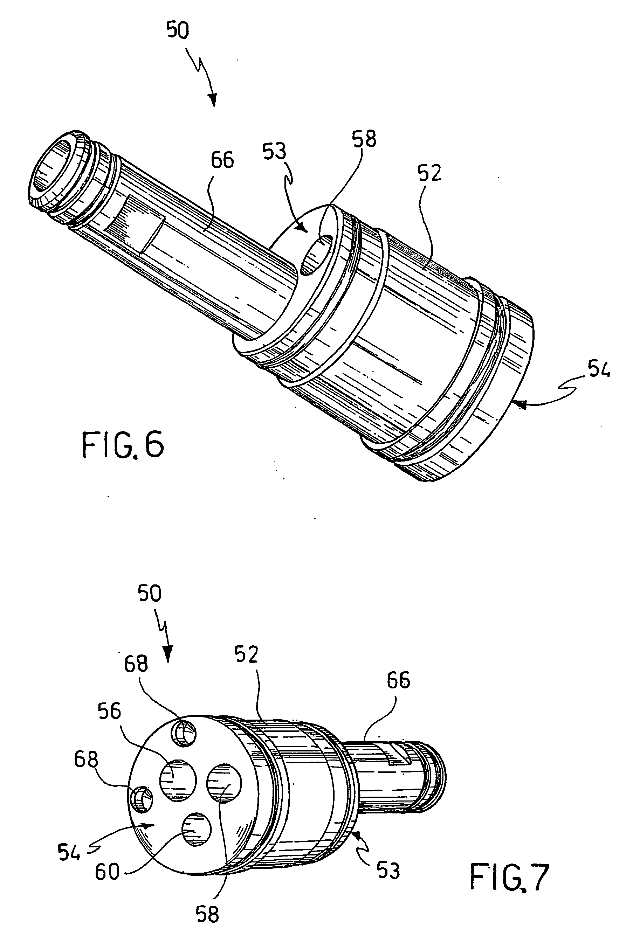

figures 6 and 7 are perspective views of a detail of the tap unit from figure 1;

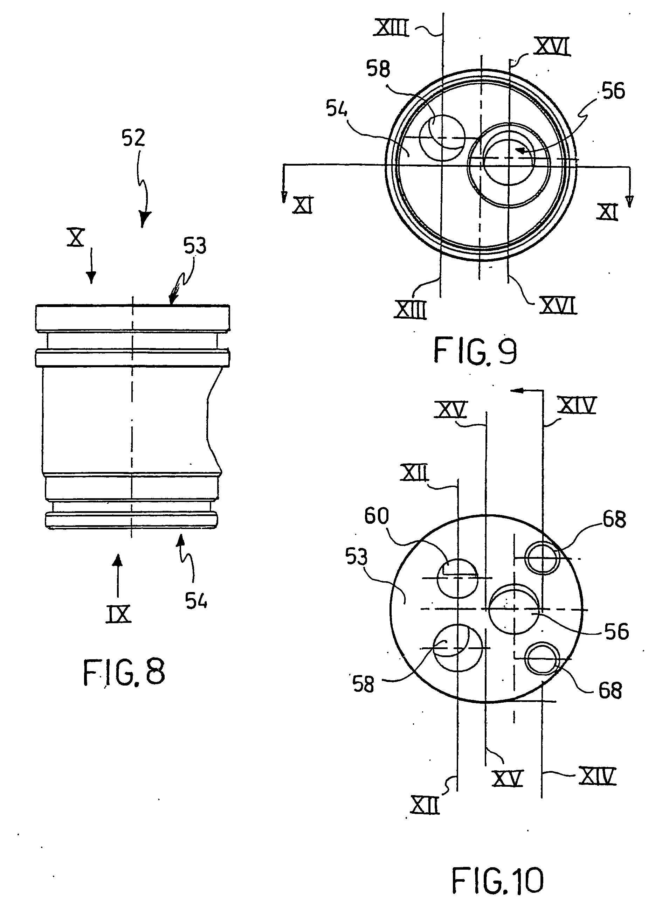

figure 8 is a side view of the detail of the tap unit from figures 6 and 7;

figure 9 is a front view of the detail from figure 8, taken on the side of arrow IX from figure 8;

figure 10 is a front view of the detail from figure 8, taken on the side of arrow X from figure 8;

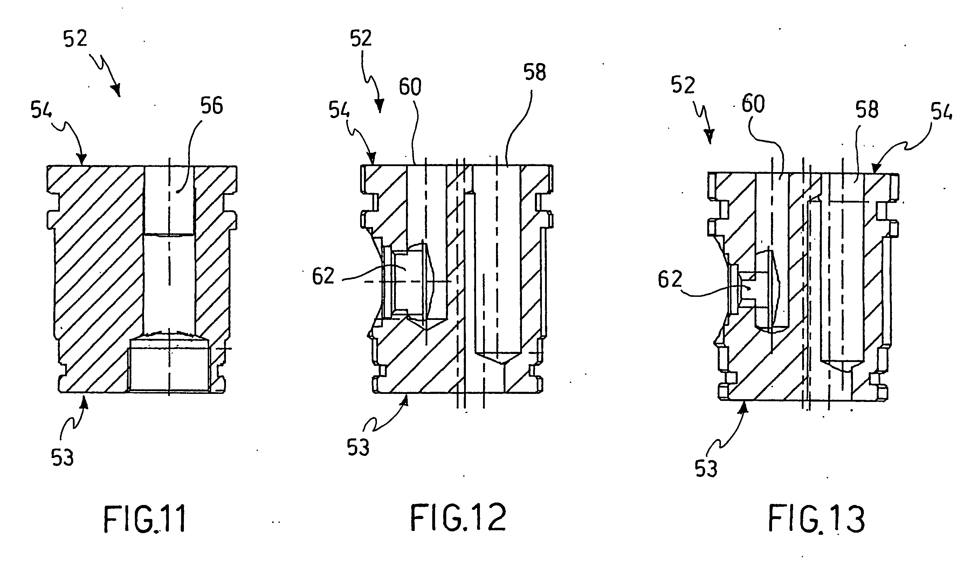

figure 11 is a sectional view of the detail from figure 8, taken along the plane XI-XI from figure 9;

figure 12 is a sectional view of the detail from figure 8, taken along the plane XII-XII from figure 10;

figure 13 is a sectional view of the detail from figure 8, taken along the plane XIII-XIII from figure 9;

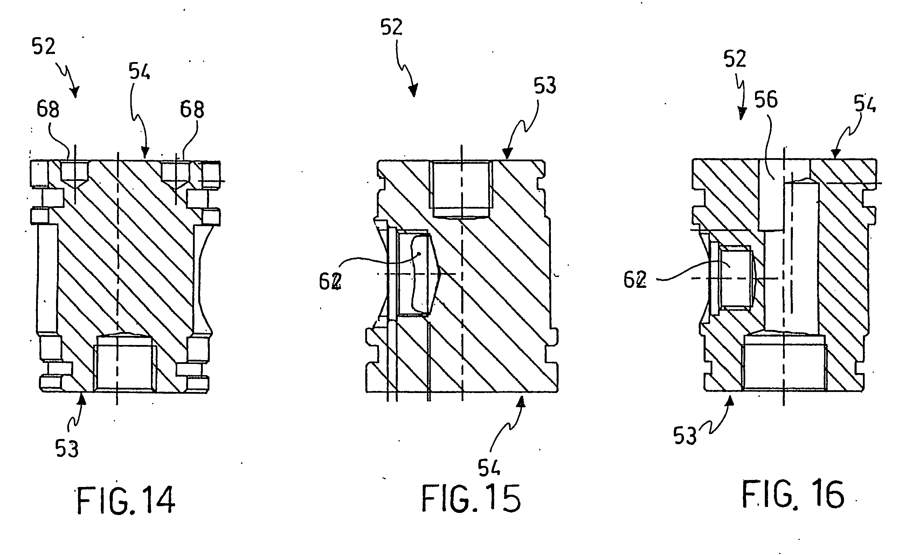

figure 14 is a sectional view of the detail from figure 8, taken along the plane XIV-XIV from figure 10;

figure 15 is a sectional view of the detail from figure 8, taken along the plane XV-XV from figure 10;

figure 16 is a sectional view of the detail from figure 8, taken along the plane XVI-XVI from figure 9;

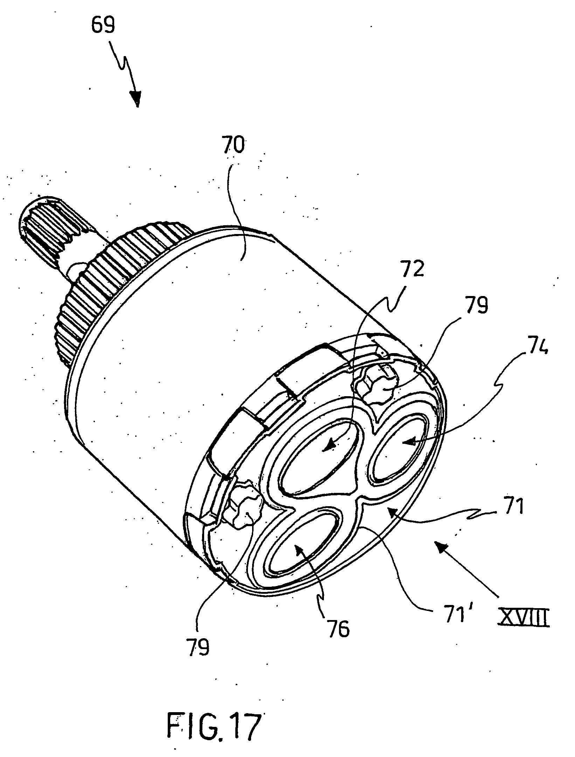

figure 17 is a perspective view of a further detail of the tap unit from figure 1;

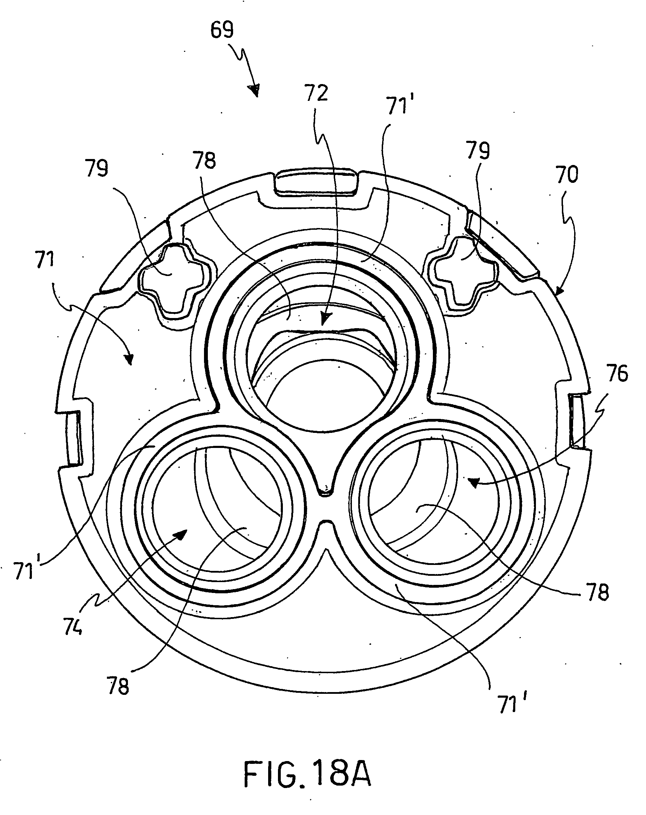

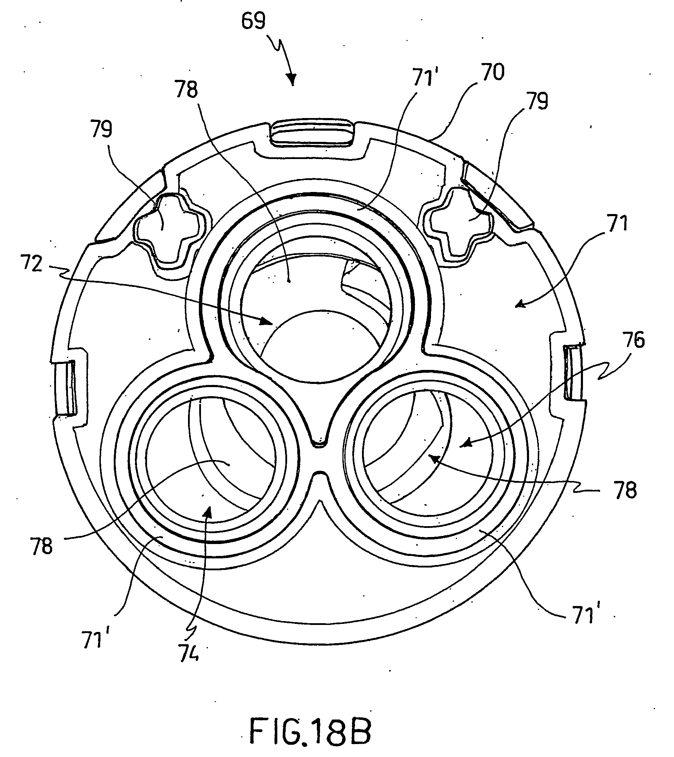

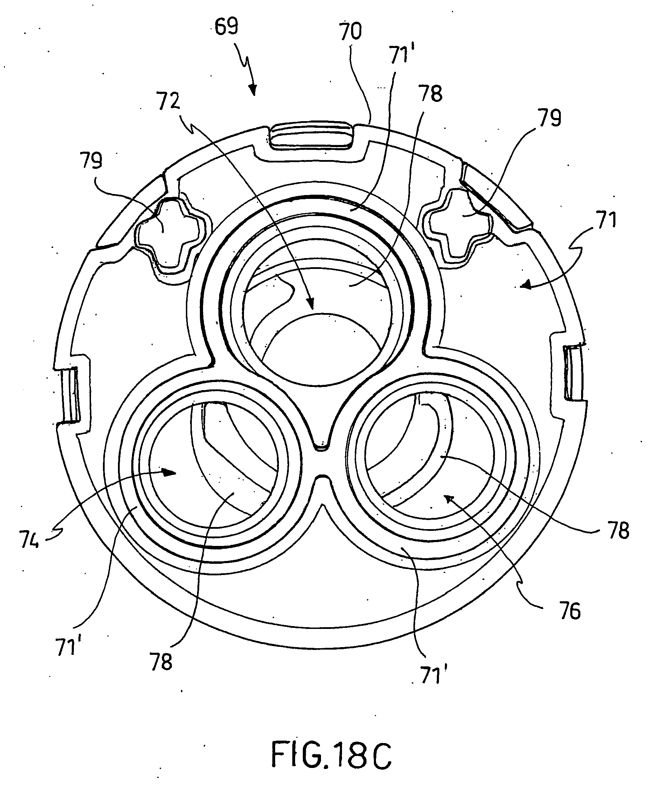

figures 18A-18C are front views of the detail from figure 17 taken on the side of arrow XVIII from figure 17, according to three different operating conditions;

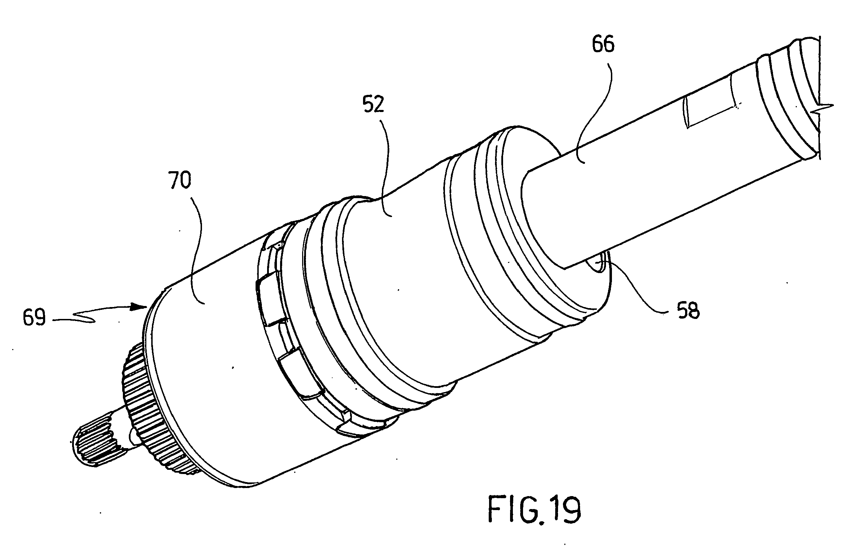

figure 19 is a perspective view of details of the tap unit from figure 1, according to an assembly configuration.

The elements or parts of elements in common of the embodiments described below will be indicated with the same numerals.

With reference to the above figures, with 4 has been generally indicated a tap unit.

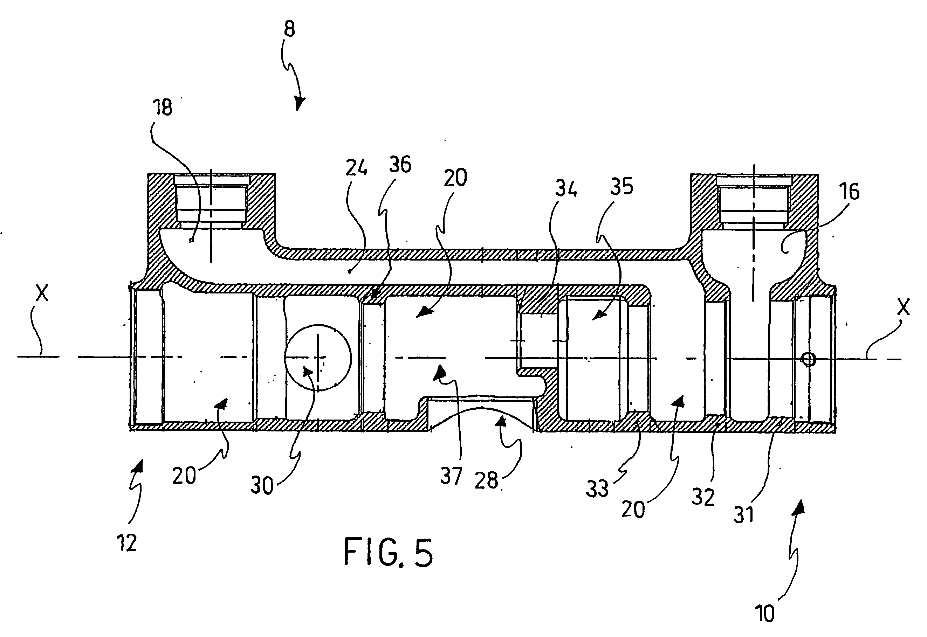

The tap unit 4 comprises a tap body 8, such as illustrated in figure 5, having an overall cylindrical configuration extending from a first to a second end 10,12 along a main direction X.

According to an embodiment, the tap body 8 comprises first and second inlets 16,18 suitable to introduce a fluid in the body, such as cold water and hot water, respectively.

For example, the first inlet 16 is placed at the first end 10 and the second inlet 18 at the second end 12.

Each inlet is suitable to be connected to connections or fittings for water feeding, which are known in the field, for example in order to be able to attach the tap unit to a wall or panel.

Advantageously, the tap body 8 is substantially hollow, i.e. it comprises a cavity 20 running through the body along the main direction X, between the first and second ends 10,12.

The tap body 8 comprises a substantially cylindrical feeding pipe 24 parallel both to said cavity 20 and the main direction X, such that the second inlet 18 is fluidically connected to a portion of the tap body 8 near first end 10.

The tap body 8 comprises at least two outlets to deliver the fluid outside the body.

For example, the first outlet of the tap body is embodied by a delivery orifice 28, for example positioned intermediate between said first and second ends and suitable to deliver the fluid according to a substantially perpendicular direction to the main direction X.

The second outlet is embodied for example by an opening 30, for example positioned on a wall of the tap body 8 and suitable to be connected for example to a shower head by means of a flexible pipe of the known type. According to an embodiment, said opening 30 is positioned on the side of the second end 12 of the tap body 8.

Preferably, the tap body 8 comprises on the side of the first end 10, a first and a second annular ridge 31,32 axially defining the first inlet 16.

The tap body comprises a third annular ridge 33 that, together with the second ridge 32, axially defines the outlet of the feeding pipe 24.

At the delivery orifice 28, the tap body 8 comprises a narrowing 34 that, together with the third annular ridge 33 defines a feeding chamber 35.

The tap body 8, on the side of the second end 12, comprises a fourth annular ridge 36 axially defining a distribution chamber 37 together with the narrowing 34.

The first end 10 of the tap body 8 is suitable to house a mixing cartridge 38, for example of the known type, which is suitable to receive at least two fluids, preferably at various temperatures, such as to suitably mix them.

The mixing cartridge 38 fits into the first end 10, that is suitably innerly threaded, such as to be arranged substantially parallel to the main direction X.

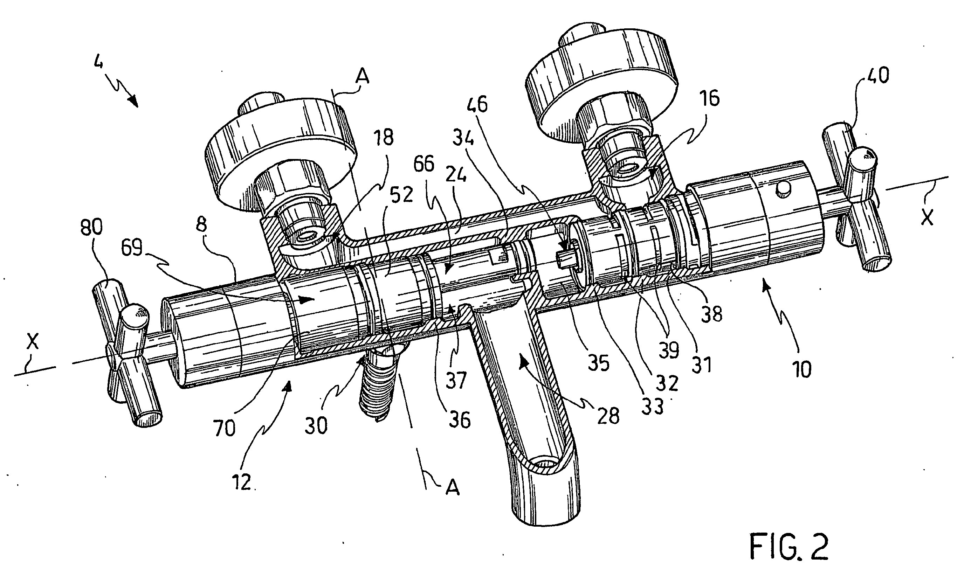

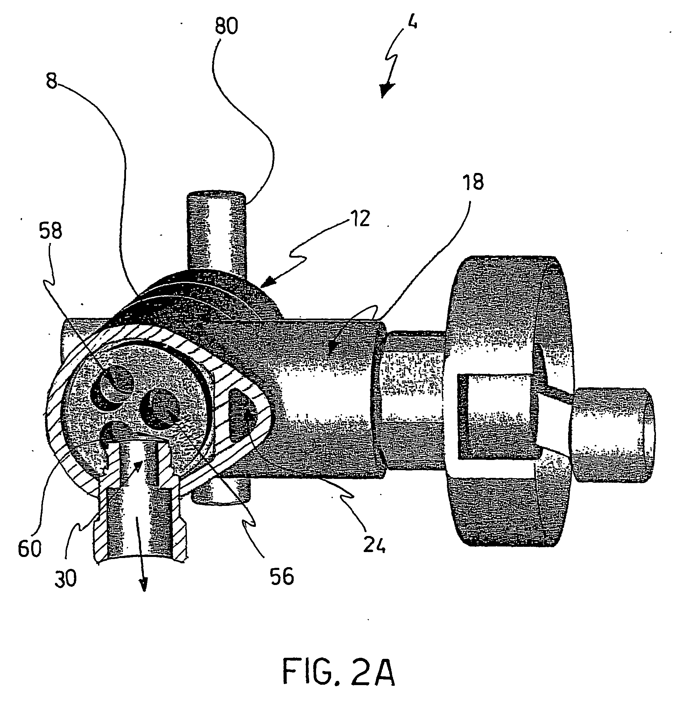

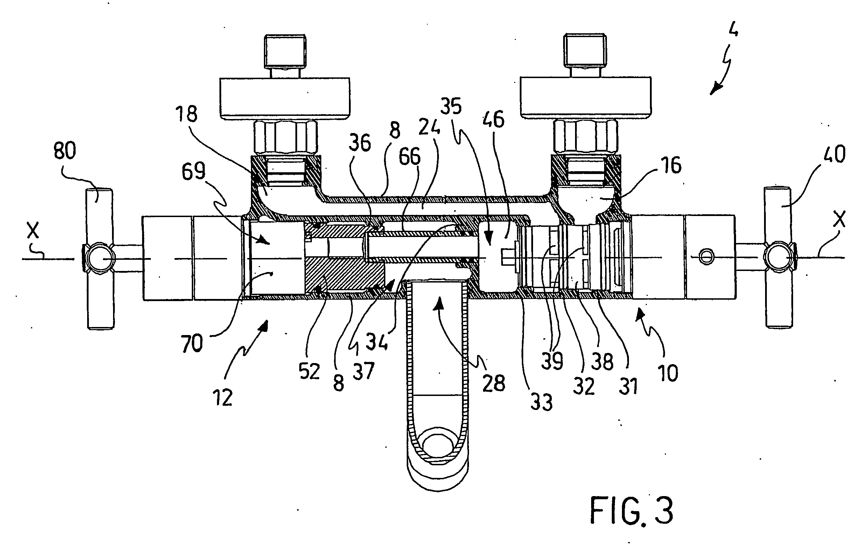

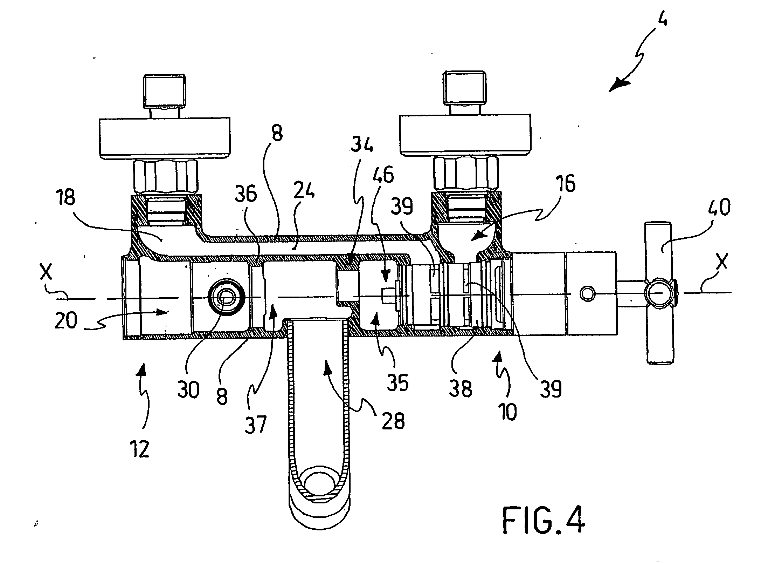

The mixing cartridge 38 intercepts the first inlet 16, from which it can receive the first fluid, and it also intercepts the feeding pipe 24 from which it can receive the second fluid. Particularly, the mixing cartridge 38 intercepts the fluids through a series of holes 39 being for example arranged on the side surface of the cartridge, such as illustrated for example in figures 2-4.

Preferably, the mixing cartridge 38 is a thermostatic cartridge, such as to allow the automatic mixing of the fluids at various temperatures in order to deliver a fluid at a preset value or temperature range, according to the user's requirements.

The mixing cartridge 38 is for example provided with a first control knob 40 that is placed outside the tap body 8, which allows to activate the mixing cartridge by means of its rotational movement.

The mixing cartridge 38 delivers the previously mixed fluid through a mixing outlet 46 facing the second end 12 of the tap body 8 relative to the main direction X. Said mixing outlet 46 preferably leads to the feeding chamber 35.

The tap body 4 comprises deflecting means 50, suitable to selectively convey the fluid, preferably previously mixed, to the at least two outlets, such as the delivery orifice 28 and the opening 30.

Said deflecting means 50 comprise a substantially cylindrical deflecting bottom 52, that is suitable to be inserted in the cavity 20 of the tap body 8, preferably on the side of the second end 12, i.e. on the side opposite the mixing cartridge 38. The deflecting bottom 52, whether in a configuration of being assembled to or inserted in the tap body 8, is positioned substantially parallel to the main direction X and is defined by first and second bases 53,54 that, in an assembly configuration in the tap body 8 face the first and second ends 10,12, respectively.

Said deflecting bottom 52 has an inlet channel 56 passing through the bottom, for example being parallel to the main direction X running along the first and second bases 53,54 of the bottom 52.

The deflecting bottom 52 comprises a first outlet channel 58 substantially parallel to said inlet channel 56 and passing through the bottom, through the bottom bases 53,54.

The deflecting bottom 52 comprises a second outlet channel 60 preferably extending from the second base 54 to the first base along a length of the bottom until intercepting a side channel 62 leading to the side wall of the bottom.

Advantageously, the deflecting bottom is inserted in the tap body such that it directly faces the side channel 62 of the bottom with said opening 30 of the tap body.

The deflecting bottom 52, at the first base 53, comprises a substantially cylindrical fitting 66 being fluidically connected to said first pipe of the bottom. The fitting 66 is made integral with the bottom for example by gluing, soldering or screwing the fitting 66 to the first base of the bottom at the first pipe.

The fitting 66 preferably fits within the narrowing 34 of the tap body 8 and faces the feeding chamber 35 towards the mixing outlet 46 of the mixing cartridge 38, being in fluid connection therewith, such as to be able to receive the mixed fluid from the mixing cartridge 38.

The deflecting bottom 52, at the second base 54, comprises at least one notch 68 suitable to provide a reference mark or restraint to the angular positioning of the deflecting means 50 on the bottom.

The deflecting means 50 comprise connecting means 69 that are suitable to provide a selective fluid connection between the inlet channel 56 and the outlet channels 58,60 of the deflecting bottom 52.

According to an advantageous embodiment, the connectig means 69 comprise a deflecting cartridge 70, for example of the known type that is suitable to interface with the deflecting bottom 52, such as to receive the fluid from the inlet channel 56 of the deflecting bottom 52 through the fitting 66.

The deflecting cartridge 70 comprises a sealing wall 71 facing said first base 53 of the bottom 52, such as to provide a fluid seal at the interface between the bottom 52 and the cartridge. Preferably, the sealing wall 71 comprises a seal 71' providing a water-tight seal with the first base 53.

The deflecting cartridge 70 comprises a plurality of holes that, in an assembly configuration of the cartridge in abutment against the second base 54 of the bottom 52, is suitable to provide a fluidical connection with the respective channels of the bottom. The seal 71' prevents that fluid may seep through the interface between the first base 53 of bottom 52 and the deflecting cartridge 70.

The deflecting cartridge 70 comprises an inlet hole 72 facing the inlet channel 56 to receive the fluid from the deflecting bottom 52, and first and second distribution holes 74,76 that can be, alternatively and selectively, fluidically connected to the first and second outlet channels 58,60 of the deflecting bottom 52, respectively.

The deflecting cartridge 70 comprises a plug member 78 suitable to selectively and alternatively close the first and second outlet channels 58,60 such as to direct the fluid from the inlet channel 56 to the outlet channels 58,60 of the bottom 52, and from these to both outlets 28,30 of the tap body 8.

Preferably, the deflecting cartridge 70 comprises a pair of pins 79 suitable to be coupled with the notches 68 of the deflecting bottom 52, such as to provide an angular positioning as well as a restraint of the relative rotation between the deflecting cartridge 70 and the deflecting bottom 52.

In other words, the angular position of the deflecting cartridge 70 relative to the deflecting bottom 52 ensures that the respective inlet 56 and outlet 58,60 channels of bottom 52 are properly aligned and fluidically connected to the inlet 72 and distribution holes 76,78 of the deflecting cartridge 70.

The deflecting cartridge 70 advantagously provides a second control knob 80 axially protruding from the tap body 8 for the user to deviate the fluid through the outlets 28,30. The second control knob 80 enables the rotary movement of the plug member 78 of the deflecting cartridge 70.

The operation of the tap unit according to the invention will be described below.

Particularly, by rotating the first control knob 40 of the mixing cartridge 38, upon manual or automatic mixing, a mixed flow of fluid is generated which flows out through the mixing outlet 46 and is channelled into the fitting 66 of the deflecting bottom 52.

The mixed fluid then outflows from the deflecting bottom 52, enters the deflecting cartridge 70 and is selectively channelled therefrom, based on the rotation of the relative second control knob 80, to the first and second outlet channels 58,60.

Particularly, when the fluid enters the first outlet channel 58, it is conveyed therefrom into the distribution chamber 37 from which it flows out through the delivery orifice 28. When the fluid enters the second outlet channel 60, then it flows out to the side channel 62 and then comes to the shower head.

It should be noted that the deviation, according to an embodiment, is carried out by means of a plug rotating between discrete positions corresponding to the outlet channels of the bottom.

As may be appreciated from what has been stated above, the tap unit described allows to overcome the drawbacks of the prior art tap units.

Particularly, the tap body geometry is particulary easy to manufacture.

In fact, the body is substantially hollow and also comes without bulkheads or inner partition walls, whereby it can be manufactured by melting and tool machining, preferably by means of a numeric control type machine in a cost-effective manner.

Furthermore, the tap pipe being associated to the delivery orifice advantageously has no deflecting members therefore it does not require to be further tool machined to provide, for example, the housings for holding said deflecting members.

Those skilled in the art, aiming at satisfying contingent and specific requirements, will be able to carry out a number of modifications and variations to the tap units described above.

For example, a deflecting bottom can be used having further pipes such as to provide the tap unit with further delivery outlets. Accordingly, a deflecting cartridge can be provided having a plug member suitable to selectively channel the fluid to the respective outlets.

The advantageous configuration of the deflecting means wherein the plug rotates between discrete positions in fact allows to have two or more outlet channels.

For example, a further opening on the side wall of the tap body can be provided, which receives the fluid from a further side channel of the bottom and sends it for example to delivery orifices of a panel being associated to the tap unit.

These and other modifications and variations are all however contemplated within the scope of the invention, such as defined in the following claims.

## Claims

1. A tap unit (4) comprising:
a tap body (8) housing a mixing cartridge (38) having two inlets (16,18) to receive at least at least two fluids to be delivered
and at least two outlets (28,30) to deliver the fluid outside the tap body (8)
and deflecting means (50) to selectively convey the fluid to said outlets (28,30)
wherein
the deflecting means (50) comprise
- a deflecting bottom (52) being at least partially inserted into the tap body (8), having an inlet channel (56) suitable to receive said fluid and at least two outlet channels (58,60),
- and connecting means (69) between the inlet channel (56) and the outlet channels (58,60) of the bottom (52), the connecting means (69) being arranged to receive the fluid to be delivered from the inlet channel (56) of the bottom (52) and selectively channel the fluid to be delivered to the outlet channels (58,60) of said deflecting bottom (52), each of said outlet channels (58,60) being fluidically connected to at least one of both outlets (28,30) of the tap body (8),
**characterised in that**
the deflecting bottom (52) comprises a fitting (66) being fludically connected to said inlet channel (56) and to a mixing outlet (46) of the mixing cartridge (38) such as to receive said fluid from the mixing outlet (46) and convey it through said deflecting bottom (52), wherein the first outlet channel (58) of the bottom (52) is fluidically connected to a distribution chamber (37) of the tap body (8) being in communication with one of said at least two outlets (28,30),
and said second outlet channel (60) is fluidically connected to an opening (30) of the tap body (8) providing said second outlet of the tap body (8).

2. The tap unit (4) according to claim 1, wherein the tap body (8) is substantially cylindrical relative to a main direction (X) and comprises a sustantially cilindrical cavity (20) coaxial with said main direction (X).

3. The tap unit (4) according to claim 2, wherein said tap body (8) extends along the main direction (X) from a first to a second end (10,12), said cavity (20) extending from the first to the second end (10,12).

4. The tap unit (4) according to any preceding claim, wherein said bottom (52) and said inlet channel (56) are substantially coaxial to each other.

5. The tap unit (4) according to any preceding claim, wherein the inlet channel (56) and the outlet channels (58,60) of the deflecting bottom (52) are substantially parallel to each other.

6. The tap unit (4) according to claim 2, wherein said distribution chamber (37) is defined, relative to the main direction X, by a second base (54) of the deflecting bottom (52).

7. The tap unit (4) according to claim 1, wherein said second outlet channel (60) is in communication with the opening (30) of the tap body (8) through a side channel (62), passing through the bottom until intercepting the second outlet channel (60).

8. The tap unit (4) according to any preceding claim, wherein the deflecting bottom (52) comprises a first substantially planar base (53), suitable to provide an abutment surface for said connecting means (69).

9. The tap unit (4) according to claim 8, wherein the connecting means (69) comprise a deflecting cartridge (70) having a sealing wall (71) facing said first base (53) of the bottom (52), such as to provide a water-tight seal at the interface between the bottom (52) and the deflecting cartridge (70).

10. The tap unit (4) according to claim 9, wherein said deflecting cartridge (70) comprises an inlet hole (72) facing the inlet channel (56) of the bottom (52) such as to receive the fluid from the bottom (52).

11. The tap unit (4) according to claim 10, wherein said deflecting cartridge 70) comprises a first distribution hole (74), being fluidically connectable to the inlet hole (72) and facing said first outlet channel (58).

12. The tap unit (4) according to claim 10 or 11, wherein said deflecting cartridge (70) comprises a second distribution hole (76) being fluidically connectable to the inlet hole (72) and facing said second outlet channel (60).

13. The tap unit (4) according to claims 11 and 12, wherein said deflecting cartridge (70) comprises a plug member suitable to selectively or alternatively connect the inlet hole (72) to the distribution holes (74,76).

14. The tap unit (4) according to claim 13, wherein said plug member (78) is a member rotating between discrete positions in order to selectively connect the inlet hole (72) to the distribution holes (74,76).

15. Tap unit (4) according to any preceding claim, comprising a mixing cartridge (38) suitable to receive two fluids at different temperatures from said inlets (16,18) and mix them by conveying said mixed fluid towards the deflecting means (50).

16. The tap unit (4) according to claim 15, wherein said mixing cartridge (38) comprises a mixing outlet (46) suitable to distribute the mixed fluid to said inlet channel (56) of the deflecting bottom (52).

17. The tap unit (4) according to claim 16, wherein said mixing outlet (46) distributes the mixed fluid in a feeding chamber (35) of the tap body (8), said feeding chamber (35) communicating with the inlet channel (56) of the deflecting bottom (52).

18. The tap unit (4) according to any claim 15 to 17, wherein said mixing cartridge (38) is a cartridge of the thermostatic type.

19. The tap unit (4) according to any claim 15 to 18, wherein the mixing cartridge (38) and the deflecting means (50) are arranged at opposite ends (10,12) of the tap body (8) along said main direction (X).

20. The tap unit (4) according to any claim 15 to 19, wherein said tap body (8) is a substantially hollow and closed cylinder, at opposite ends (10,12) relative to the main direction (X), from said mixing cartridge (38) and said deflecting means (50).

## Patentansprüche

1. Hahneinheit (4), umfassend:
einen Hahnkörper (8), der eine Mischpatrone bzw. - kartusche (38) aufnimmt, aufweisend zwei Einlässe (16, 18), um zumindest zwei Flüssigkeiten zu empfangen, die abzugeben sind,
und zumindest zwei Auslässe (28, 30), um die Flüssigkeit außerhalb des Hahnkörpers (8) abzugeben,
und Ablenkungsmittel (50), um selektiv die Flüssigkeit zu den Auslässen (28, 30) zu befördern,
wobei
die Ablenkungsmittel (50) umfassen:
- einen Ablenkungsboden (52), der zumindest teilweise in den Hahnkörper (8) eingesetzt ist und einen Einlasskanal (56), der geeignet ist, die Flüssigkeit zu empfangen, und zumindest zwei Auslasskanäle (58, 60) aufweist,
- und Verbindungsmittel (69) zwischen dem Einlasskanal (56) und den Auslasskanälen (58, 60) des Bodens (52),
wobei die Verbindungsmittel (69) angeordnet sind, um die abzugebende Flüssigkeit von dem Einlasskanal (56) des Bodens (52) zu empfangen und die abzugebende Flüssigkeit selektiv an die Auslasskanäle (58, 60) des Ablenkungsbodens (52) zu leiten, wobei jeder der Auslasskanäle (58, 60) fluidisch mit zumindest einem der beiden Auslässe (28, 30) des Hahnkörpers (8) verbunden ist,
**dadurch gekennzeichnet, dass**
der Ablenkungsboden (52) ein Passstück (66) umfasst, das fluidisch mit dem Einlasskanal (56) und einem Mischauslass (46) der Mischkartusche (38) derart verbunden ist, dass es die Flüssigkeit von dem Mischauslass (46) empfängt und sie durch den Ablenkungsboden (52) leitet, wobei der erste Auslasskanal (58) des Bodens (52) fluidisch mit einer Verteilungskammer (37) des Hahnkörpers (8) verbunden ist, die bzw. der mit einem der zumindest zwei Auslässen (28, 30) in Kommunikation bzw. Verbindung steht,
und der zweite Auslasskanal (60) fluidisch mit einer Öffnung (30) des Hahnkörpers (8) verbunden ist, die den zweiten Auslass des Hahnkörpers (8) bereitstellt.

2. Hahneinheit (4) nach Anspruch 1, wobei der Hahnkörper (8) im Wesentlichen zylindrisch relativ zu einer Hauptrichtung (X) ist und einen im Wesentlichen zylindrischen Hohlraum (20) koaxial mit bzw. zu der Hauptrichtung (X) umfasst.

3. Hahneinheit (4) nach Anspruch 2, wobei sich der Hahnkörper (8) entlang der Hauptrichtung (X) von einem ersten zu einem zweiten Ende (10, 12) erstreckt, wobei sich der Hohlraum (20) von dem ersten zu dem zweiten Ende (10, 12) erstreckt.

4. Hahneinheit (4) nach einem der vorhergehenden Ansprüche, wobei der Boden (52) und der Einlasskanal (56) im Wesentlichen koaxial zueinander sind.

5. Hahneinheit (4) nach einem der vorhergehenden Ansprüche, wobei der Einlasskanal (56) und die Auslasskanäle (58, 60) des Ablenkungsbodens (52) im Wesentlichen parallel zueinander sind.

6. Hahneinheit (4) nach Anspruch 2, wobei die Verteilungskammer (37) relativ zu der Hauptrichtung (X) durch eine zweite Basis (54) des Ablenkungsbodens (52) definiert ist.

7. Hahneinheit (4) nach Anspruch 1, wobei der zweite Auslasskanal (60) in Kommunikation bzw. Verbindung mit der Öffnung (30) des Hahnkörpers (8) durch einen Seitenkanal (62) ist, der durch den Boden tritt bzw. verläuft, bis er den zweiten Auslasskanal (60) unterbricht bzw. auf diesen trifft.

8. Hahneinheit (4) nach einem der vorhergehenden Ansprüche, wobei der Ablenkungsboden (52) eine erste im Wesentlichen planare bzw. ebene Basis (53) umfasst, die geeignet ist, eine Anlagefläche bzw. -oberfläche für die Verbindungsmittel (69) bereitzustellen.

9. Hahneinheit (4) nach Anspruch 8, wobei die Verbindungsmittel (69) eine Ablenkungspatrone bzw. - kartusche (70) mit einer Dichtungswand (71) umfassen, die der ersten Basis (53) des Bodens (52) derart zugewandt ist, dass sie eine wasserdichte Dichtung an der Schnittstelle zwischen dem Boden (52) und der Ablenkungskartusche (70) bereitstellt.

10. Hahneinheit (4) nach Anspruch 9, wobei die Ablenkungskartusche (70) ein Einlassloch (72) umfasst, das dem Einlasskanal (56) des Bodens (52) derart zugewandt ist, das es die Flüssigkeit von dem Boden (52) empfängt.

11. Hahneinheit (4) nach Anspruch 10, wobei die Ablenkungskartusche (70) ein erstes Verteilungsloch (74) umfasst, das fluidisch mit dem Einlassloch (72) verbindbar ist und dem ersten Auslasskanal (58) zugewandt ist.

12. Hahneinheit (4) nach Anspruch 10 oder 11, wobei die Ablenkungskartusche (70) ein zweites Verteilungsloch (76) umfasst, das fluidisch mit dem Einlassloch (72) verbindbar ist und dem zweiten Auslasskanal (60) zugewandt ist.

13. Hahneinheit (4) nach Anspruch 11 und 12, wobei die Ablenkungskartusche (70) ein Steckerglied umfasst, das geeignet ist, das Einlassloch (72) selektiv oder alternativ mit den Verteilungslöchern (74, 76) zu verbinden.

14. Hahneinheit (4) nach Anspruch 13, wobei das Steckerglied (78) ein Glied ist, das sich zwischen diskreten Positionen dreht, um das Einlassloch (72) selektiv mit den Verteilungslöchern (74, 76) zu verbinden.

15. Hahneinheit (4) nach einem der vorhergehenden Ansprüche, umfassend eine Mischpatrone bzw. -kartusche (38), die geeignet ist, zwei Flüssigkeiten mit unterschiedlichen Temperaturen von den Einlässen (16, 18) zu empfangen und diese zu vermischen, indem die vermische Flüssigkeit zu den Ablenkungsmitteln (50) hin befördert wird.

16. Hahneinheit (4) nach Anspruch 15, wobei die Mischkartusche (38) einen Mischauslass (46) umfasst, der geeignet ist, die vermischte Flüssigkeit an den Einlasskanal (56) des Ablenkungsbodens (52) zu verteilen.

17. Hahneinheit (4) nach Anspruch 16, wobei der Mischauslass (46) die vermischte Flüssigkeit in einer Zufuhrkammer (35) des Hahnkörpers (8) verteilt, wobei die Zufuhrkammer (35) mit dem Einlasskanal (56) des Ablenkungsbodens (52) kommuniziert bzw. in Verbindung steht.

18. Hahneinheit (4) nach einem der Ansprüche 15 bis 17, wobei die Mischkartusche (38) eine Kartusche des thermostatischen Typs ist.

19. Hahneinheit (4) nach einem der Ansprüche 15 bis 18, wobei die Mischkartusche (38) und die Ablenkungsmittel (50) an gegenüberliegenden bzw. entgegengesetzten Enden (10, 12) des Hahnkörpers (8) entlang der Hauptrichtung (X) angeordnet sind.

20. Hahneinheit (4) nach einem der Ansprüche 15 bis 19, wobei der Hahnkörper (8) ein im Wesentlichen hohler und geschlossener Zylinder an gegenüberliegenden bzw. entgegengesetzten Enden (10, 12) relativ zu der Hauptrichtung (X) von der Mischkartusche (38) und den Ablenkungsmitteln (50) ist.

## Revendications

1. Unité de robinet (4) comprenant:
un corps de robinet (8) logeant une cartouche de mélange (38) ayant deux entrées (16, 18) pour recevoir au moins deux fluides à délivrer
et au moins deux sorties (28, 30) pour délivrer le fluide à l'extérieur du corps de robinet (8)
et des moyens de déviation (50) pour acheminer de manière sélective le fluide vers lesdites sorties (28, 30),
dans laquelle
les moyens de déviation (50) comprennent :
- un fond de déviation (52) qui est au moins en partie inséré dans le corps de robinet (8), ayant un canal d'entrée (56) approprié pour recevoir ledit fluide et au moins deux canaux de sortie (58, 60), et
- des moyens de raccordement (69) entre le canal d'entrée (56) et les canaux de sortie (58, 60) du fond (52), les moyens de raccordement (69) étant aménagés pour recevoir le fluide à délivrer du canal d'entrée (56) du fond (52) et canaliser de manière sélective le fluide à délivrer vers les canaux de sortie (58, 60) dudit fond de déviation (52), chacun desdits canaux de sortie (58, 60) étant en communication fluidique avec au moins une des deux sorties (28, 30) du corps de robinet (8),
**caractérisée en ce que**
le fond de déviation (52) comprend un raccord (66) qui est en communication fluidique avec ledit canal d'entrée (56) et avec une sortie de mélange (46) de la cartouche de mélange (38) de manière à recevoir ledit fluide de la sortie de mélange (46) et à l'acheminer à travers ledit fond de déviation (52), dans laquelle le premier canal de sortie (58) du fond (52) est en communication fluidique avec une chambre de distribution (37) du corps de robinet (8) qui est en communication avec une desdites au moins deux sorties (28, 30), et
ledit second canal de sortie (60) est en communication fluidique avec une ouverture (30) du corps de robinet (8) formant ladite seconde sortie du corps de robinet (8).

2. Unité de robinet (4) selon la revendication 1, dans laquelle le corps de robinet (8) est sensiblement cylindrique par rapport à une direction principale (X) et comprend une cavité sensiblement cylindrique (20) coaxiale à ladite direction principale (X).

3. Unité de robinet (4) selon la revendication 2, dans laquelle ledit corps de robinet (8) s'étend le long de la direction principale (X) d'une première à une seconde extrémité (10, 12), ladite cavité (20) s'étendant de la première à la seconde extrémité (10, 12).

4. Unité de robinet (4) selon une quelconque revendication précédente, dans laquelle ledit fond (52) et ledit canal d'entrée (56) sont sensiblement coaxiaux l'un à l'autre.

5. Unité de robinet (4) selon une quelconque revendication précédente, dans laquelle le canal d'entrée (56) et les canaux de sortie (58, 60) du fond de déviation (52) sont sensiblement parallèles l'un à l'autre.

6. Unité de robinet (4) selon la revendication 2, dans laquelle ladite chambre de distribution (37) est définie, par rapport à la direction principale X, par une seconde base (54) du fond de déviation (52).

7. Unité de robinet (4) selon la revendication 1, dans laquelle ledit second canal de sortie (60) est en communication avec l'ouverture (30) du corps de robinet (8) à travers un canal latéral (62), traversant le fond jusqu'à intercepter le second canal de sortie (60).

8. Unité de robinet (4) selon une quelconque revendication précédente, dans laquelle le fond de déviation (52) comprend une première base sensiblement plane (53) appropriée pour offrir une surface de butée auxdits moyens de raccordement (69).

9. Unité de robinet (4) selon la revendication 8, dans laquelle les moyens de raccordement (69) comprennent une cartouche de déviation (70) ayant une paroi d'étanchéité (71) faisant face à ladite première base (53) du fond (52), de manière à former un joint étanche à l'eau à l'interface entre le fond (52) et la cartouche de déviation (70).

10. Unité de robinet (4) selon la revendication 9, dans laquelle ladite cartouche de déviation (70) comprend un orifice d'entrée (72) faisant face au canal d'entrée (56) du fond (52) de manière à recevoir le fluide du fond (52).

11. Unité de robinet (4) selon la revendication 10, dans laquelle ladite cartouche de déviation (70) comprend un premier orifice de distribution (74) qui peut être mis en communication fluidique avec l'orifice d'entrée (72) et faisant face audit premier canal de sortie (58).

12. Unité de robinet (4) selon la revendication 10 ou 11, dans laquelle ladite cartouche de déviation (70) comprend un second orifice de distribution (76) qui peut être mis en communication fluidique avec l'orifice d'entrée (72) et faisant face audit second canal de sortie (60).

13. Unité de robinet (4) selon les revendications 11 et 12, dans laquelle ladite cartouche de déviation (70) comprend un élément obturateur approprié pour raccorder sélectivement ou alternativement l'orifice d'entrée (72) aux orifices de distribution (74, 76).

14. Unité de robinet (4) selon la revendication 13, dans laquelle ledit élément obturateur (78) est un élément tournant entre des positions discrètes afin de raccorder sélectivement l'orifice d'entrée (72) aux orifices de distribution (74, 76).

15. Unité de robinet (4) selon une quelconque revendication précédente, comprenant une cartouche de mélange (38) appropriée pour recevoir deux fluides à différentes températures des entrées (16, 18) et les mélanger en acheminant ledit fluide mélangé vers les moyens de déviation (50).

16. Unité de robinet (4) selon la revendication 15, dans laquelle ladite cartouche de mélange (38) comprend une sortie de mélange (46) appropriée pour distribuer le fluide mélangé dans ledit canal d'entrée (56) du fond de déviation (52).

17. Unité de robinet (4) selon la revendication 16, dans laquelle ladite sortie de mélange (46) distribue le fluide mélangé dans une chambre d'alimentation (35) du corps de robinet (8), ladite chambre d'alimentation (35) communiquant avec le canal d'entrée (56) du fond de déviation (52).

18. Unité de robinet (4) selon une quelconque revendication 15 à 17, dans laquelle ladite cartouche de mélange (38) est une cartouche de type thermostatique.

19. Unité de robinet (4) selon une quelconque revendication 15 à 18, dans laquelle la cartouche de mélange (38) et les moyens de déviation (50) sont aménagés aux extrémités opposées (10, 12) du corps de robinet (8) le long de ladite direction principale (X).

20. Unité de robinet (4) selon une quelconque revendication 15 à 19, dans laquelle ledit corps de robinet (8) est un cylindre sensiblement creux et fermé, aux extrémités opposées (10, 12) par rapport à la direction principale (X), en partant de ladite cartouche de mélange (38) et desdits moyens de déviation (50).
